Europäisches Patentamt

(19) European Patent Office

Office européen des brevets

(11) Veröffentlichungsnummer: **0 010 574**
**A1**

(12) **EUROPÄISCHE PATENTANMELDUNG**

(21) Anmeldenummer: **79102714.7**

(22) Anmeldetag: **30.07.79**

(51) Int. Cl.³: **C 09 K  3/18, C 23 F  11/00**

(30) Priorität: **31.10.78  DE 2847350**

(43) Veröffentlichungstag der Anmeldung: **14.05.80**
**Patentblatt 80/10**

(84) Benannte Vertragsstaaten: **AT CH FR GB NL**

(71) Anmelder: **LONZA-Werke G.m.b.H., D-7858 Weil am Rhein, Baden (DE)**

(72) Erfinder: **Sappelt, Reinhart, Dr. Dipl.-Chem., Bois-Strasse 58, D-7890 Waldshut-Tiengen (DE)**
Erfinder: **Christensen, Kresten, Bachstrasse, Brig(Kanton Wallis) (CH)**
Erfinder: **Sienel, Günter, Dr.Dipl.-Chem., Steinbruchweg 95, D-7891 Weilheim (DE)**

(74) Vertreter: **Von Füner, Alexander, Dr. K. L. Schiff Dr. A. v. Füner et al, Dipl. Ing. D. Strehl Dr. U. Schübel-Hopf Dipl. Ing. D. Ebbinghaus Dr. Ing. D. Finck Patentanwalte Mariahilfplatz 2&3, D-8000 München 90 (DE)**

(54) **Mittel zum Schmelzen von Eis und Schnee.**

(57)  Gegenstand der Erfindung ist ein Mittel zum Schmelzen von Eis und Schnee, insbesondere auf Verkehrsflächen, das im wesentlichen Streusalz und einen Korrosionsinhibitor und gegebenenfalls andere übliche Zusätze enthält, wobei erfindungsgemäß als Korrosionsinhibitor Kalkstickstoff in einer Menge von 0,1 bis 10 Gew.%, vorzugsweise 1 bis 5 Gew.%, zugesetzt wird. Ein derartiges Mittel zeigt eine wesentlich bessere Tauwirkung als normales Streusalz.

EP 0 010 574 A1

0010574

## Beschreibung

Die Verwendung von Streusalz im Winter auf Verkehrsflächen ist mit negativen Begleiterscheinungen verbunden, insbesondere fördert das Streusalz die Korrosion an Kraftfahrzeugen und Verkehrseinrichtungen.

Der Zusatz von Korrosionsinhibitoren, meist Phosphatverbindungen, konnte nicht immer überzeugen, sei es durch deren hohen Preis oder durch die zusätzliche Belastung der Umwelt, wie z.B. Eutrophierung der Gewässer.

Aus der deutschen Patentschrift 2 061 190 ist es bekannt, als Auftaumittel Harnstoff mit Diammonphosphat zu verwenden. Harnstoff ist jedoch verhältnismässig teuer und das Phosphat führt zu vermehrter Phosphatbelastung der Abwässer.

Aufgabe der vorliegenden Erfindung ist ein Taumittel mit niedrigen Gestehungskosten, das die korrodierende Wirkung des Salzes herabsetzt und die schädliche Wirkung des Salzes auf Pflanzen vermindern kann.

Erfindungsgemäss wird das durch ein Mittel gemäss Patentanspruch 1 erreicht.

Unter Streusalz wird handelsübliches, vergälltes Natriumchlorid verstanden.

Als Kalkstickstoff wird technisches Calciumcyanamid bezeichnet, das durch einen geringen Anteil an fein verteiltem Kohlenstoff dunkel gefärbt ist.

0010574

Zweckmässig enthält das Mittel den Kalkstickstoff in gemahlener Form mit einer mittleren Korngrösse von 0,1 bis 1 mm.

Das erfindungsgemässe Mittel kann auch noch andere Zusätze enthalten, beispielsweise Netzmittel oder beispielsweise Düngstoffe und Spurenelemente, die einen positiven Einfluss auf das Wachstum der an die Verkehrsfläche angrenzenden Vegetation ausübt.

Der Gehalt an Kalkstickstoff beträgt im Mittel 0,1 bis 10 Gew.%, wobei aus wirtschaftlichen Gründen ein vorzugsweiser Bereich von 1 bis 5 Gew. % eingehalten werden soll.

Streusalz-Kalkstickstoffmischungen nach der Erfindung zeigen auf Eis und Schnee eine wesentlich bessere Tauwirkung als normales Streusalz. Dieser bessere Taueffekt wird zum kleineren Teil durch die grössere Wärmeabsorption des dunkel gefärbten Mittels, hauptsächlich durch die Wärmetönung der chemischen Reaktion aus im Kalkstickstoff enthaltenen Calciumoxid und entstehendem Schmelzwasser verursacht.

Der Kalkstickstoff übt eine hervorragende korrosionshemmende Wirkung insbesondere auf Stahlblech aus und verhindert im weitesten Masse die übliche korrosive Wirkung reinen Streusalzes.

Die an sich bekannte düngende Wirkung des Kalkstickstoffes wirkt sich positiv auf die Vegetation aus, da Pflanzen mit der Natriumchloridbelastung bei gleichzeitiger Düngung leichter fertig werden.

Beispiel

Zur Durchführung von Korrosionsversuchen wurden Stahlbleche der Grösse 5 x 4 cm und einer Stärke von 1 mm 14 Tage lang in 1%igen Lösungen von

    1) reinem Streusalz
    2) einer Mischung aus 1% Kalkstickstoff und
                99% Streusalz
    3) einer Mischung aus 10% Kalkstickstoff und
                90% Streusalz

getaucht.  Dabei wurden je Lösung und Mischung je ein
- ohne Lackierung versehenes (Nr. 1,4,7)
- mit Grundierfarbe lackiertes (Nr.11,14,17) und
- ein grundiertes und lackiertes Blech (Nr.21, 24,27) verwendet.  (Bei den verwendeten Lacken handelte es sich um Automobillackfarben)
Die mit 1%igen Lösungen erhaltenen Resultate werden mit folgender Tabelle veranschaulicht.

| Mittel ╲ Blech | ohne Lackierung | grundiert | grundiert und lackiert |
|---|---|---|---|
| reines Streusalz | Probe 7 starke Korrosion | Probe 17 starke Korrosion | Probe 27 Korrosion sichtbar |
| 1% Kalkstickstoff 99% Streusalz | Probe 1 leichte Korrosion | Probe 11 Korrosionsspuren sichtbar | Probe 21 keine Korrosion |
| 10% Kalkstickstoff 90% Streusalz | Probe 4 Korrosionsspuren sichtbar | Probe 14 Korrosionsspuren sichtbar | Probe 24 keine Korrosion |

0010574

Aus der Tabelle ist fortschreitend von oben nach unten die Korrosionswirkung einer 1%igen wässrigen Lösung von reinem Streusalz (Nr. 7, 17, 27) und die korrosionshemmende Wirkung von 1% des Mittels in Wasser mit 1% (Nr. 1,11,21) und 10% (Nr. 4,14,24) Kalkstickstoff im Streusalz deutlich zu erkennen.

Während die grundierten und lackierten Bleche (Nr.21,24) in den schwach alkalischen Lösungen der Kalkstickstoff/ Streusalz-Mischungen so gut wie gar nicht angegriffen worden sind, weist das entsprechende Blech (Nr. 27) aus der reinen Streusalz-Lösung erhebliche Korrosionen auf.

Die bei den grundierten Blechen (Nr. 11, 14) auftretenden Korrosionen sind in erster Linie auf ein Abblättern des nicht alkalibeständigen Grundierlackes zurückzuführen.

Entsprechend den lackierten Blechen zeigen auch die unlackierten eine deutliche korrosionshemmende Wirkung eines Kalkstickstoff/Streusalz-Gemisches (Nr.1,4).

- 1 -

EPA-19597

MITTEL ZUM SCHMELZEN VON EIS UND SCHNEE

Patentansprüche

1. Mittel zum Schmelzen von Eis und Schnee, insbesondere auf Verkehrsflächen, das im wesentlichen Streusalz und einen Korrosionsinhibitor und gegebenenfalls andere übliche Zusätze enthält,
dadurch gekennzeichnet,
daß es als Korrosionsinhibitor Kalkstickstoff in einer Menge von 0,1 bis 10 Gew.%, vorzugsweise 1 bis 5 Gew.%, enthält.

2. Mittel gemäss Patentanspruch 1,
dadurch gekennzeichnet,
daß es als Korrosionsinhibitor gemahlenen Kalkstickstoff mit einer mittleren Korngrösse von 0,1 bis 1 mm enthält.

**Europäisches Patentamt**

**EUROPÄISCHER RECHERCHENBERICHT**

00 10574

Nummer der Anmeldung

EP 79- 10 2714

| | EINSCHLÄGIGE DOKUMENTE | | KLASSIFIKATION DER ANMELDUNG (Int.Cl. ³) |
|---|---|---|---|
| Kategorie | Kennzeichnung des Dokuments mit Angabe, soweit erforderlich, der maßgeblichen Teile | betrifft Anspruch | |
| A | <u>US - A - 3 310 494</u> (F.R. SPROULE)<br><br>* Spalte 1, Zeilen 64-72; Spalte 2, Zeilen 1-71; Spalte 3, Zeilen 1-20; Ansprüche 1,2 *<br><br>-- | | C 09 K 3/18<br>C 23 F 11/00 |
| A | <u>GB - A - 1 091 443</u> (CARGILL)<br><br>* Seite 1, Zeilen 18-31, 61-80; Seite 2, Zeilen 1-30; Seite 3, Zeilen 82-97; Seite 4, Zeilen 9-20; Ansprüche 1,2 *<br><br>---- | | **RECHERCHIERTE SACHGEBIETE (Int. Cl. ³)**<br><br>C 09 K 3/18 |

Der vorliegende Recherchenbericht wurde für alle Patentansprüche erstellt.

| Recherchenort | Abschlußdatum der Recherche | Prüfer |
|---|---|---|
| Den Haag | 18-01-1980 | BOULON |

EPA form 1503.1   06.78